# EUROPEAN PATENT APPLICATION

(11) **EP 1 324 215 A1**
(43) Date of publication of application: **02.07.2003**
(21) Application number: 01130276.7
(22) Date of filing: 20.12.2001
(51) Int. Cl.: G06F 17/30

(54) **Electronically archiving and retrieving data objects**

(71) Applicant: SAP Aktiengesellschaft, 69190 Walldorf (DE)
(72) Inventor: Herbst, Axel, 69120 Heidelberg (DE); Buchmüller, Gerd, 76684 Östringen (DE)

(57) **Abstract**

Methods, systems and computer programs for electronically archiving (400) and retrieving data objects (210): For archiving (400), data objects (210) are one-to-one converted (410) to markup objects (220). Each markup object (220) represents the data items (212) of the corresponding data object (210). The markup objects (220) are concatenated (430) to a single data structure (200) that is byte addressable. Object identification (212) is indexed (440) to addresses (205) of the data structure (200) for each markup object (220). Retrieving is performed in inverse order. Further features are: using XML, coding numerical items by characters, character set code identification, compressing and expanding, and adding index and semantic descriptor to the structure (200).

## Description

### Field of the Invention

The present invention generally relates to data processing and, more particularly, relates to computer systems, programs, and methods for archiving and retrieving data objects.

### Background

Public and private organizations such as companies or universities electronically access data by computers that implement applications, databases and archives. Data is usually structured and technically represented by data objects. For example, a company stores business documents such as orders and invoices that have technically separate representations for address, product, currency, or monetary amount.

Technical key problems relate to (a) data amount, (b) modifications, and (c) data access.

Generally, applications write and read the objects to and from the database. Due to huge amount of data ("mass data"), electronic archiving tools periodically copy selected data from the databases to long-term electronic archives. Long-term refers to a term measured in months, years or decades. Often the archiving term is determined by law. The archiving tools are often part of the application. The archive is implemented by media and management software. Media are, for example, optical, magnetic or optomagnetic media (e.g., disks, tapes).

Usually, the media is configured as WORM (write once, read many times) memory.

Data selection for archiving purposes depends on a variety of well-known aspects. For example, the tool archives data objects for closed business transactions (such as paid invoices) but leaves data objects for ongoing business transactions in the database (such as unpaid invoices).

During an archiving session, the tools archive sets of data objects rather then archiving single data objects. Technically, the sets are archived as files. For minimizing communication and storage overhead, administrators have to optimize the file size.

During the archiving term, the application and the archive (especially, its management software) are subject to various and often non-coordinated modifications such as, for example, updating, upgrading, replacing, migrating to different platform or operating systems, changing character code or numeric code, switching media, modernizing programming or retrieval languages and so on. Despite ongoing changes in application and archive tool, data must be preserved at any time and information loss must be prevented. Information is lost when data or metadata (i.e. determination of semantics) is lost. While an initial application writes a data object to an initial archive, later scenarios all challenge technical solutions:
- a modified application retrieves the same data object from the initial database,
- a modified application retrieves objects from a modified archive, or
- the still initial application retrieves objects from a modified archive.

Occasionally, the modified application is completely different from the initial one and is reduced to a retrieving tool.

Turning to data retrieving (as the complement to archiving), the application or any other retrieving tool ("requestor") needs to locate individual data objects (at random) and to read them from the archive within a time frame challenged by two conditions: reading from medium takes time (latency, transfer rate); and the tool (also the person using the tool) do only allow a maximum time.

Further, data objects should be retrieved without superfluous data that causes undesired costs in terms of time, memory, bandwidth and so on.

These and other well known requirements to electronic archiving are often referred to by terms such as readability, platform independence, format independence, medium independence, data transfer efficiency, interpretability and random access.

Electronic archiving data objects is discussed in a variety of publications, such as, for example:
- Schaarschmidt, Ralf: "Archivierung in
   Datenbanksystemen". Teubner. Reihe
   Wirtschaftsinformatik. B.G. Teubner Stuttgart,
   Leipzig, Wiesbaden. 2001. ISBN 3-519-00325-2.
- Herbst, Axel: "Anwendungsorientiertes DB-Archivieren". Springer Verlag Berlin Heidelberg New York 1997. ISBN 3-540-63209-3.
- Schaarschmidt, Ralf; Röder, Wolfgang:
   "Datenbankbasiertes Archivieren im SAP System R/3". Wirtschaftsinformatik 39 (1997) 5, pages 469-477.
- Jürgen Gulbins, Markus Seyfried, Hans Strack-Zimmermann: "Dokumenten-Management", Springer Berlin 1998. ISBN 3-540-61595-4.

Archiving and retrieving tools are commercially available. For example, the Archive Development Kit (ADK) is such a proprietary tool for R/3 business applications systems by SAP Aktiengesellschaft Walldorf (Baden), Germany.

There is a need to provide method, system and computer program that accommodates (a) data amount, (b) modifications, and (c) data access.

### Summary of the Invention

The present invention relates complementary methods, systems and programs for electronically archiving and retrieving data objects (DO). For archiving, a computer converts the data objects (DO) into markup objects (MO), concatenates the markup objects (MO) to a data structure (DS) being a single byte addressable file, and indexes object identification (OID) to addresses for each markup object (MO). Retrieving is performed essentially in the opposite order with corresponding steps looking up, reading and converting.

Optional features to ensure interpretability are:
- using XML,
- coding numerical items by characters,
- character set code identification (CID, MIBenum),
- compressing and expanding (MO to CO, back to MO, considering LID), and
- adding index (I) and semantic descriptor (D, DTD, XML schema) to the data structure.

The present invention addresses technical key problems that relate to data amount, modifications, and data access. Modifications to application and archive are accommodated.

### Brief Description of the Drawings

- FIG. 1: illustrates a simplified block diagram of a computer system;
- FIG. 2: illustrates a simplified memory with memory portions and data structure (DS);
- FIG. 3: illustrates an exemplary data object (DO);
- FIG. 4: illustrates an exemplary markup object (MO);
- FIG. 5: illustrates an exemplary compressed object (CO);
- FIG. 6: illustrates a data structure with concatenated markup objects (MO);
- FIG. 7: illustrates the data structure (DS) with concatenated compressed objects (CO);
- FIG. 8: illustrates an overview for an archiving method by showing data objects (DO), markup objects (MO), the data structure (DS) and an index (I);
- FIG. 9: illustrates a flowchart for the archiving method;
- FIG. 10: illustrates a flowchart for a retrieving method; and
- FIG. 11: illustrates a hierarchy of a data table with exemplary data objects (DO), as well as illustrates an XML-file for the complete table and the index (I).

### Computer System in General

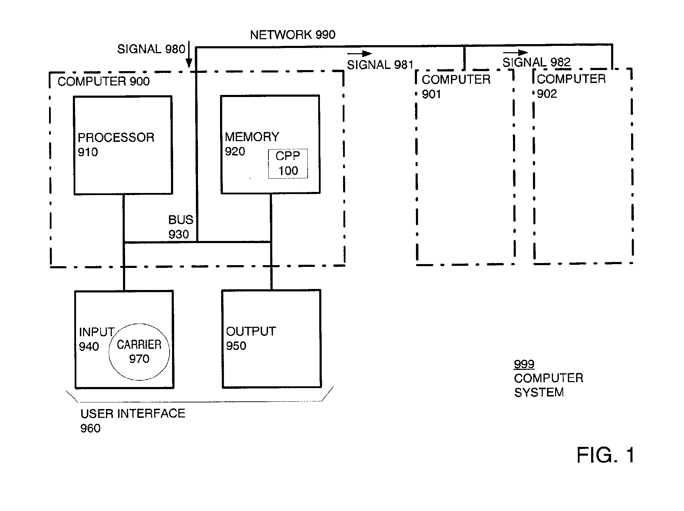

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900. Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion. Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals. Networking environments (as network 990) are commonplace in offices, enterprise-wide computer networks, intranets and the Internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc. Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card Computer and program are closely related. As used hereinafter, phrases, such as "the computer provides" and "the program provides", are convenient abbreviation to express actions by a computer that is controlled by a program.

### Detailed Description

Computer system 999 of FIG. 1 is considered to have archive/retrieve computer 900, application computer 901, and database computer 902. CPP 100 is considered to be operating on computer 900. Implementing the present invention to the other computers is convenient as well. Terms are used as follows: "Retrieve" refers to reading objects from the archive. "Data object (DO)" stands for structured data as provided by the application. "Markup object (MO)" stands for an object in markup language. "Compressed object (CO)" stands for an object in a compressed form. "Descriptor" stands for any schema (also: "scheme") that indicates the semantic of the markup language. "File" stands for a data structure with a plurality of addressable bytes. "Byte" stands for the smallest unit of information that is discussed here. Usually, a byte has 8 bit.

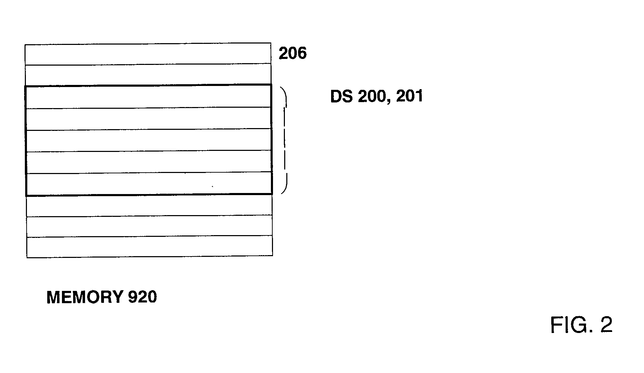

FIG. 2 illustrates simplified memory 920 with memory portions 206 and data structure 200/201. Memory 920 has a plurality of byte addressable memory portions 206 (symbolized by lines). As indicated by a bold frame, memory 920 (cf. FIG. 1) stores data structure 200 (cf.

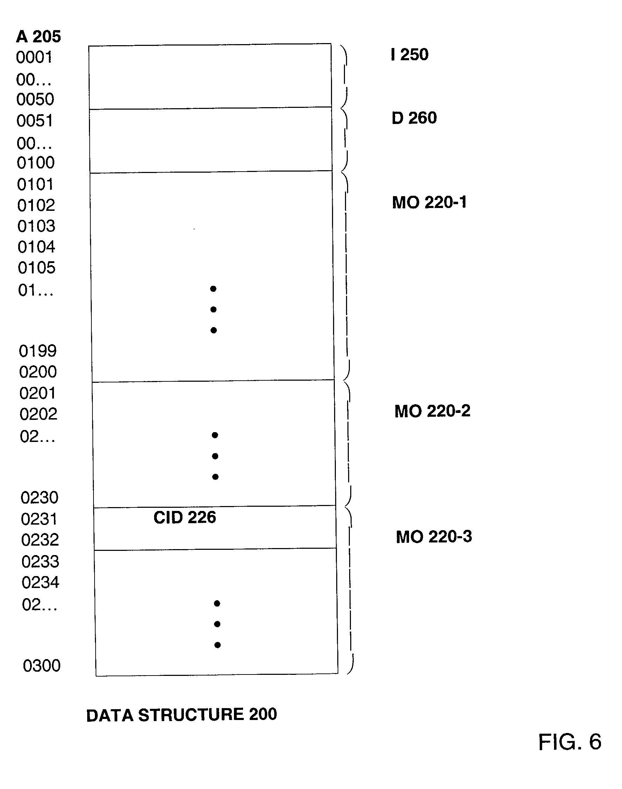

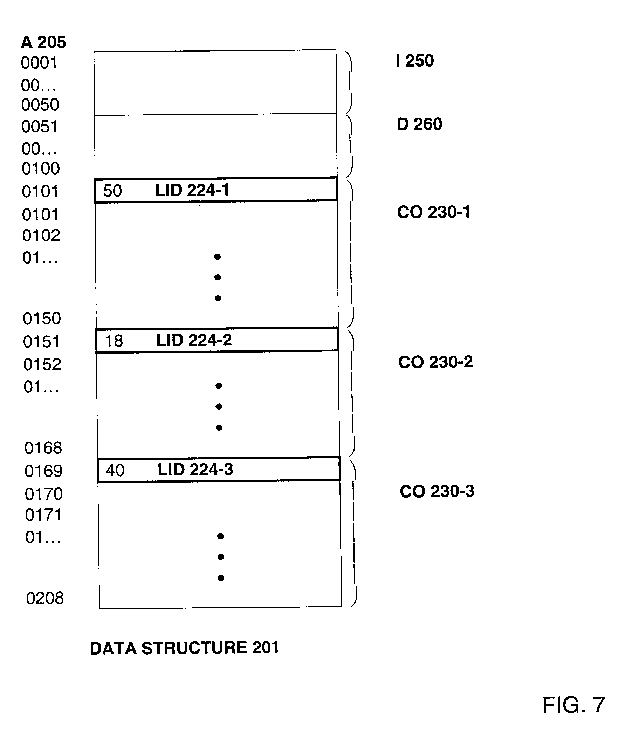

FIG. 6). In an alternative embodiment, memory 920 stores data structure 201 (cf. FIG. 7). Data structures 200/201 are also byte addressable.

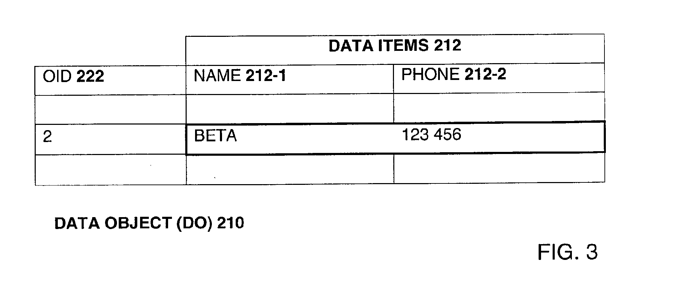

FIG. 3 illustrates exemplary data object (DO) 210. Data object 210 has data items 212 and is identified by object identification (OID) 222 (e.g., a key). For convenience of explanation, a phone list is taken as an example. Application computer 901 and database computer 902 (cf. FIG. 1) use a table with "name" and "phone" columns (data items 212-1 and 212-2). The exemplary data object 210 is the entry with the name "BETA" (item 212-1) and the phone number "123 456" (item 212-2). For convenience, FIG. 3 shows data object 210 by a bold frame. Using explicit OID is convenient; however, implicit identification is sufficient.

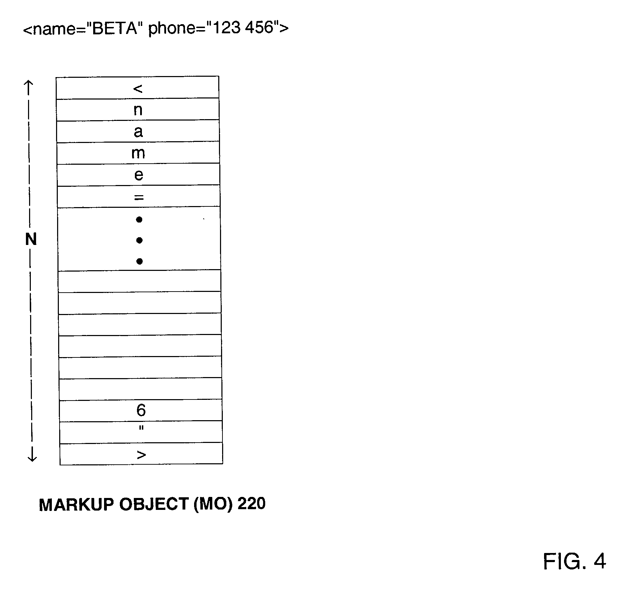

FIG. 4 illustrates exemplary markup object (MO) 220. Markup object 220 represents data items 212 of corresponding data object 210. In other words, markup object 220 has been obtained by one-to-one conversion of item 212-1 (e.g., name) and item 212-2 (e.g., phone) of data object 210. Representing in markup language is well known in the art. For example, the markup language is XML. As in the example, the language reads as <name="BETA" phone="123 456"> with items 212 (e.g., BETA, 123 456) and tag identifiers therefore (e.g., <name=" " phone=" ">). FIG. 4 illustrates markup object 220 by bytes (cf. FIG. 2) with N=30 byte.

Alternatives for the tag identifiers are, for example, <name>BETA</name> and <phone>123 456</phone>.

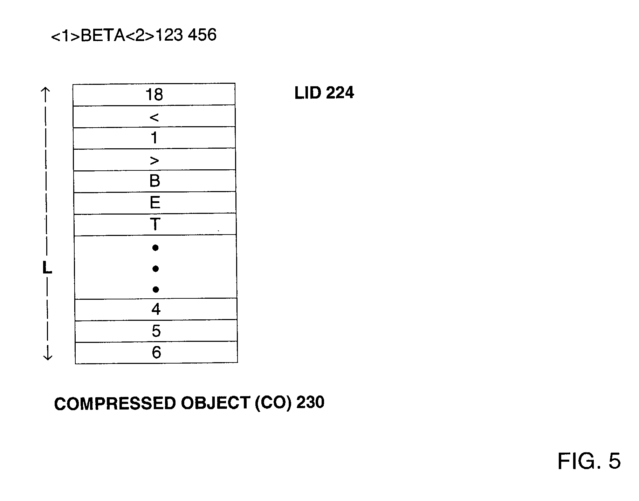

FIG. 5 illustrates exemplary compressed object (CO) 230. In the example, the tag identifiers of FIG. 4 have been compressed to <1> and <2>; data items 212 are not compressed. The number of bytes has been reduced from N=30 to L=18. The first byte indicates L by length identification (LID) 224.

Persons of skill in the art can select other compression techniques, for example Huffmann coding.

FIG. 6 illustrates data structure 200 with concatenated markup objects (MO) 220-1, 220-2 and 220-3. For convenience, exemplary byte addresses (A) 205 are indicated on the left side. Decimal numbers are used for conveniently counting; hexadecimal or other number systems are useful as well.

Index (I) 250 and descriptor (D) 260 have addresses 0001 to 0050 and 0051 to 0100, respectively. Markup object 220-1 has N=100 byte at addresses 0101-0200; markup object 220-2 (cf. FIG. 4) has N=30 byte at following addresses 0201-0230; markup object 220-3 has N=70 byte at following addresses 0231-0300.

Index 250 is a control block for storing this assignment (OID to A). In other words, object identification OID=1 (for MO 220-1) has been indexed to A=0101; OID=2 (for MO 220-2) has been indexed to A=0201; and OID=3 (for MO 220-3) has been indexed to A=0231. The descriptor D represents the semantics of data items 212 in markup objects 220, for example, by stating that the tag identifiers (cf. FIG. 4) stand for name and phone number.

Optionally, two or more markup objects (MO) are coded by different character sets. Character sets are standardized by well-known organizations, such as ISO and JIS, or companies. For example, markup objects 220-1 and 220-2 use Latin, but object 220-3 uses Cyrillic (or Greek, or Chinese, or Japanese, or Korean, or Arabic, etc.). FIG. 6 also illustrates that code identification (CID) 226 for markup object 220-3 has been added at addresses 0231-0232.

While in the prior art (ADK), a single character set is valid for a complete data structure; the present invention optionally distinguishes character sets for each object. CID 226 can be represented by text or by numbers. The Internet Assigned Numbers Authority (IANA) identifies character sets by unique integer numbers, the so-called "MIBenum" numbers (Management Information Base). Using such standard is convenient because code identification (CID) is interpretable without any further information. For example, CID 226 (for MO 220-3) is MIBenum "2084", technically represented by the bit patters 00001000 and 00100100 at the mentioned addresses.

FIG. 7 illustrates data structure 201 with concatenated compressed objects (CO) 230. Similar as structure 200 in FIG. 6, structure 201 is byte addressable. The objects are compressed objects (CO) 230 (cf. FIG. 5) each having length identification (LID) 224 (bold frames). For example, MO 220-1 with N=100 byte has been compressed to CO 230-1 with L=50 byte; MO 220-2 with N=30 byte has been compressed to CO 230-2 with L=18 byte; and MO 220-3 with N=70 byte has been compressed to CO 230-3 with L=40 yte. Length identification 224 indicates L for each CO 230, preferably, at the beginning of each CO 230.

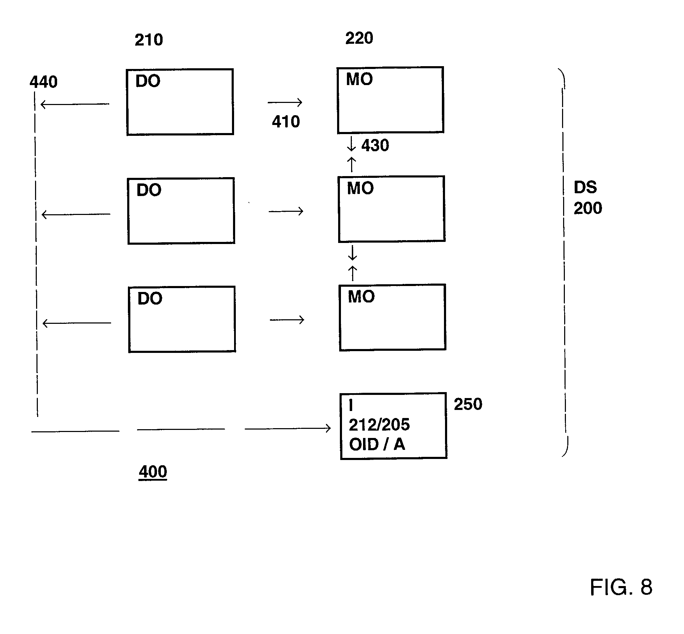

FIG. 8 illustrates an overview for archiving method 400 by data objects (DO) 210, markup objects (MO) 220, data structure (DS) 200 and index (I) 250, as well as arrows for method steps converting 410, concatenating 430 and indexing 440. Index (I) 250 stores object identification (OID) 212 with corresponding addresses 205 of data structure 200 for each markup object 220.

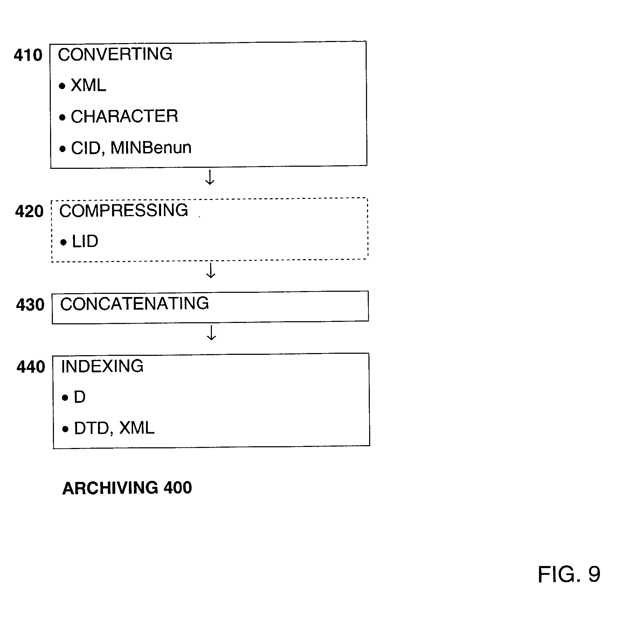

FIG. 9 illustrates a flowchart for archiving method 400. Method 400 for electronically archiving a plurality of data objects 210 (having data items 212, cf. FIG. 3) comprises concatenating 430 objects 210 (i.e. as MO 220) to data structure 200 (byte addressable, cf. FIGS. 2, 6) and indexing 440 object identification 222 for each object 210/220 to addresses (A) 205 of data structure 200. Prior to concatenating 430, the following step is performed: converting 410 the plurality of data objects 210 to a plurality of markup objects 220 by one-to-one conversion, wherein each markup object 220 represents data items 212 of the corresponding data object 210. Useful and preferred features are indicated by bullet marks and a dashed frame. Preferably, during converting 410, markup objects 220 are provided in extensible markup language (XML). Preferably, numerical data items 212 are encoded by character code. For example, the real number "2.5" is coded to a character-only string with the character "2", the period character, and the character "5". Preferably, during converting 410, code identification (CID) 226 is added to some or all markup objects 220. Preferably, during converting 410, code identification 226 is represented by MIBenum numbers for character sets defined by IANA. (cf. FIG. 6). Preferably, after converting 410 but prior to concatenating 430, compressing 420 compresses markup objects (MO) 220 to compressed objects (CO) 230 with length identification (LID) 224 so that compressed objects 230 are concatenated 430 to structure 201 (cf. FIG. 7).

Preferably, during indexing, descriptor (D) 260 is added to data structure 200. D represents the semantics of the data items 212 in the markup objects 220. Preferably, descriptor 260 is formulated in a document type definition (DTD) schema or in XML schema.

Storing data structure 200 or 201 to media is performed during or after method 400. Persons of skill in the art can accomplish this without the need of further explanation herein.

Index 250 is - optionally - stored in a database separate from structure 200/201. This approach enhances efficiency. To ensure interpretability, descriptor 260 should be stored as part of structure 200/201.

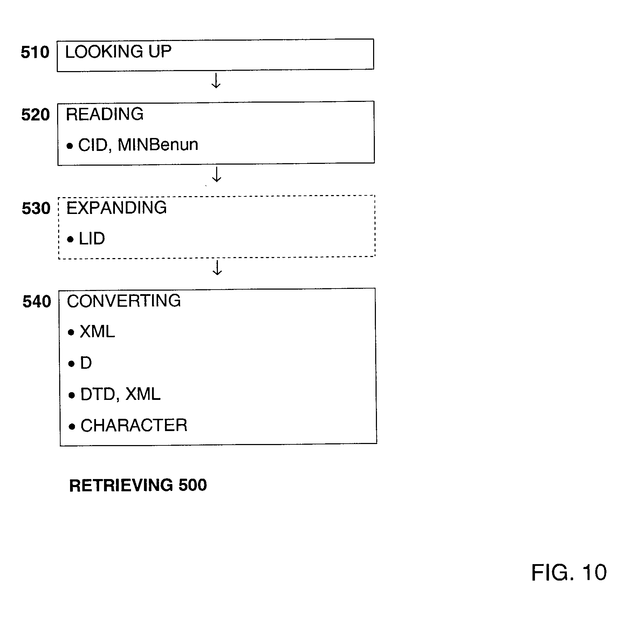

FIG. 10 illustrates a flowchart for retrieving method 500. Method 500 for electronically retrieving data object 210 from byte addressable data structure 200 for a given object identification 222 comprises the following steps: looking up 510 the address (A) 205 (in data structure 200 or database) that corresponds to the object identification 212; reading 520 markup object 220 at address (A) 205; converting 540 markup object 220 to data object 210, wherein markup object 220 represents data items 212 of corresponding data object 210. Preferably, method 500 retrieves from structure 201 (cf.

FIG. 7). Prior to converting 540, compressed object (CO) 230 is expanded 530 to markup object (MO) 220 by reading length identification (LID) 224 and reading compressed object (CO) 230 as a number of bytes (i.e. L byte) given by length identification (LID) 224.

The optional features of method 500 correspond to the features of method 400 (e.g., CID, MIBenum, XML, descriptor D etc.).

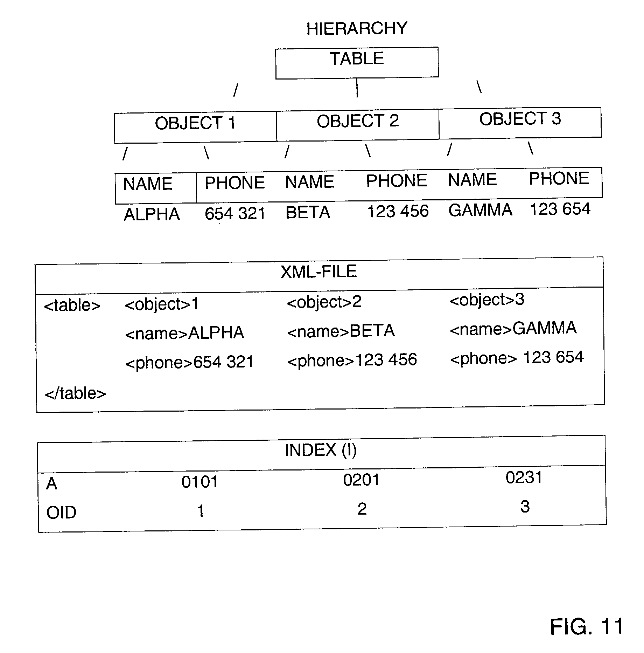

FIG. 11 illustrates a hierarchy of a data table with exemplary data objects (DO) as well as illustrates an XML-file for the complete table and index (I). The table has 3 objects, each for "name" and "phone". Below, the figure shows a corresponding XML-file with tags for the complete table and with object tags for object identification, for "name" and for "phone". For convenience, closing tags (i.e., "</name" tags) and other well-known XML-statements are omitted.

The prior art approach with archiving the XML-file and retrieving data items by an XML-parser would be time consuming. For a given object identification (e.g., OID 2), the parser would have to search for the object identification tag by reading everything stored in front of the object to be retrieved (i.e., all tags of object 1).

The index below shows advantages of the present invention. Retrieving is expedited because the steps looking up 510 in the index, reading 520 from the address and converting 540 (i.e. by a parser) do not require parsing non-relevant objects.

Having explained the present invention in connection with method 400 and 500 was convenient; archive/retrieve computer 900 and computer program product (CPP) 100 can be implemented by those of skill in the art without the need of further explanation herein. Computer 900 has a plurality of means, each one for performing a method step. Likewise, computer instructions of CPP 100 are provided for each method step. Method, system and CPP can also be implemented for other computers, such as application computer 901 or database computer 902. Database backup was conveniently not discussed here; the present invention can be used for backup purposes as well. Deleting data objects from the database after archiving is well known in the art as well.

### Reference Numbers

- 100: computer program product (CPP)
- 200: data structure with markup objects (MO)
- 201: data structure with compressed objects (CO)
- 205: addresses
- 206: memory portions in data structure
- 210: data object (DO)
- 212: data item
- 220: markup object (MO)
- 222: object identification (OID)
- 224: length identification (LID)
- 226: code identification (CID)

- 230: compressed object (CO)
- 250: index (I)
- 260: descriptor (D)
- 400: archiving method
- 410: converting
- 420: compressing
- 430: concatenating
- 440: indexing
- 4xx, 5xx: method steps
- 500: retrieving method
- 510: looking up
- 520: reading
- 530: expanding
- 540: converting
- 900: archive/retrieve computer
- 901: application computer
- 902: database computer
- 920: memory
- 999: computer system
- 9x0: hardware components
- CID: code identification
- CO: compressed object
- D: descriptor
- DO: data object
- I: index
- IANA: Internet Assigned Numbers Authority
- ID: identification
- L: number of bytes in CO
- LID: length identification
- MIM: Management Information Base
- MO: markup object

- N: number of bytes in MO
- OID: object identification

## Claims

1. Method (400) for electronically archiving a plurality of data objects (210), the data objects (210) having data items (212), the method with concatenating (430) the objects (210/220) to a single data structure (200) that is byte addressable and with indexing (440) object identification (222) for each object (210/220) to addresses (205) of the data structure (200), the method (400) **characterized in that** prior to concatenating (430), the following step is performed: converting (410) the data objects (210) to a plurality of markup objects (220) by one-to-one conversion, wherein each markup object (220) represents the data items (212) of the corresponding data object (210).

2. The archiving method (400) of claim 1, wherein during converting (410), the markup objects (220) are provided in extensible markup language (XML).

3. The archiving method (400) of claim 1, wherein during converting (410), numerical data items (212) are encoded by character code.

4. The archiving method (400) of claim 1, wherein during converting (410), code identification (226) is added to markup objects (220).

5. The archiving method (400) of claim 4, wherein during converting (410), code identification (226) is represented by MIBenum numbers for character sets by IANA.

6. The method (400) of claim 1, wherein after converting (410) but prior to concatenating (430), the following step is performed: compressing (420) the markup objects (220) to compressed objects (230) with length identification (224).

7. The archiving method (400) of claim 1, wherein a descriptor (260) representing the semantics of the data items (212) in the markup objects (220) is added to the data structure (210).

8. The archiving method (400) of claim 7, wherein the descriptor (260) is formulated in a document type definition (DTD) schema.

9. The archiving method (400) of claim 7, wherein the descriptor is formulated in an XML schema.

10. Computer (900) for electronically archiving a plurality of data objects (210), the data objects (210) having data items (212), the computer (900) with means for concatenating (430) the objects (210/220) to a single data structure (200) that is byte addressable and with means for indexing (440) object identification (222) for each object (210/220) to addresses (205) of the data structure (200), the computer (900) **characterized by** means for converting (410) the data objects (210) to a plurality of markup objects (220) by one-to-one conversion, prior to concatenating (410), wherein each markup object (220) represents the data items (212) of the corresponding data object (210).

11. The computer (900) of claim 10, wherein the means for converting (410) provide the markup objects (220) in extensible markup language (XML).

12. The computer (900) of claim 10, wherein the means for converting (410) encode numerical data items (212) by character code.

13. The computer (900) of claim 10, wherein the means for converting (410) add code identification (226) to markup objects (220).

14. The computer (900) of claim 13, wherein the means for converting (410) represent code identification (226) by MIBenum numbers for character sets of IANA.

15. The computer (900) of claim 10, with means for compressing (420) the markup objects (220) to compressed objects (230) with length identification (224), the means for compressing being activated after converting (410) but prior to concatenating (430).

16. The computer (900) of claim 10, having means to add a descriptor (260) representing the semantics of the data items (212) in the markup objects (220) to the data structure (210).

17. The computer (900) of claim 16, wherein the means to add a descriptor (260) uses a document type definition (DTD) schema.

18. The computer (900) of claim 16, wherein the means to add a descriptor (260) uses an XML schema.

19. Computer program product (100) for electronically archiving a plurality of data objects (210), the data objects (210) having data items (212), the computer program product having instructions that cause a computer (900) to concatenate (430) the objects (210/220) to a single data structure (200) that is byte addressable and to index (440) object identification (222) for each object (210/220) to addresses (205) of the data structure (200), the computer program product (400) **characterized by** further instructions for performing prior to concatenating (430): converting (410) the data objects (210) to a plurality of markup objects (220) by one-to-one conversion, wherein each markup object (220) represents the data items (212) of the corresponding data object (210).

20. The computer program product (100) of claim 19, wherein the instructions for converting (410) cause the computer to provide the markup objects (220) in extensible markup language (XML).

21. The computer program product (100) of claim 19, wherein the instructions for converting (410) cause the computer (900) to encode numerical data items (212) by character code.

22. The computer program product (100) of claim 19, wherein the instructions for converting (410), cause the computer (900) to add code identification (226) to markup objects (220).

23. The computer program product (100) of claim 22, wherein the instructions for converting (410) cause the computer (900) to represent code identification (226) by MIBenum numbers for character sets of IANA.

24. The computer program product (100) of claim 19, with further instructions that cause the computer (900) to compress (420) the markup objects (220) to compressed objects (230) with length identification (224), the instructions for compressing being activated after converting (410) but prior to concatenating (430).

25. The computer program product (100) of claim 19, with further instructions that cause the computer to add a descriptor (260) representing the semantics of the data items (212) in the markup objects (220) to the data structure (210).

26. The computer program product (100) of claim 25, wherein the instructions to add a descriptor (260) cause the computer (900) to use a document type definition (DTD) schema.

27. The computer program product (100) of claim 25, wherein the instructions to add a descriptor (260) cause the computer (900) to use an XML schema.

28. A method (500) for electronically retrieving a data object (210) from a byte addressable data structure (200) for a given object identification (212), the method (500) comprising the following steps:
looking up (510) the address (205) that corresponds to the object identification (212);
reading (520) the markup object (220) at the address (205);
converting (540) the markup object (220) to the data object (210), wherein the markup object (220) represents the data items (212) of the corresponding data object (210).

29. The retrieving method (500) of claim 28, wherein prior to converting (540), a compressed object (230) is expanded (530) to the markup object (220) by reading a length identification (224) and reading the compressed object (230) as a number of bytes given by the length identification (224).

30. Computer system for performing the method of claims 28 and 29.

31. Computer program product (100) having instructions that cause a computer to perform the method of claims 28 and 29.
